# EUROPEAN PATENT APPLICATION

(11) **EP 3 364 348 A1**
(43) Date of publication of application: **22.08.2018**
(21) Application number: 17166605.0
(22) Date of filing: 13.04.2017
(51) Int. Cl.: G06Q 10/06

(54) **A DISTRIBUTED, HETEROGENEOUS BUSINESS PROCESS MANAGEMENT PROCESS ENGINE FOR THE INTERNET OF EVERYTHING**

(30) Priority: 15.02.2017 EP 17290021
(71) Applicant: RunMyProcess, 75002 Paris (FR)
(72) Inventor: Schroiff, Klaus, Gordon NSW, New South Wales 2072 (AU); Boulay, Denis, 94120 Fontenay Sous Bois (FR)
(74) Representative: Epping - Hermann - Fischer

(57) **Abstract**

The present invention relates to a heterogeneous business process management, BPM, system (300) for a distributed execution of BPM workflows, comprising a master process engine (410) configured to operate in a first operating environment; and at least one slave process engine (420), configured to operate in a second operating environment different from the first operating environment, wherein each slave process engine (420) is associated with a corresponding profile (550) comprising at least one restriction associated with the slave process engine (420). The master process engine (410) is configured to manage a processing environment for a plurality of BPM workflows, to retrieve the profile (550) associated with the at least one slave process engine (420) and, on execution of a first BPM workflow (500), to send at least one processing request to the at least one slave process engine (420) in accordance with the at least one restriction comprised in the retrieved profile (550). The at least one slave process engine (420) is configured, in response to the at least one processing request, to execute at least a part of the first BPM workflow (500) in the second operating environment.

The invention further relates to a method for operating a heterogeneous BPM system (300) and a method for reporting status data of a heterogeneous BPM system (300)

## Description

### Field of the invention

The present invention relates to a heterogeneous business process management (BPM) system for a distributed execution of BPM workflows, a method for operating a heterogeneous BPM system and a method for reporting status data of a heterogeneous BPM system.

### State of the Art

Business process management (https://en.wikipedia.org/wiki/Business process management) is a field in operations management that focuses on improving corporate performance by managing and optimizing a company's business processes. It can therefore be described as a "process optimization process." It is argued that BPM enables organizations to be more efficient, more effective and more capable of change than a functionally focused, traditional hierarchical management approach. These processes can impact the cost and revenue generation of an organization.

There are four critical components of a BPM suite:
- Process engine - a platform for modelling and executing process-based applications
- Business analytics - enable managers to identify business issues, trends, and opportunities with reports and dashboards and react accordingly
- Content management - provides a system for storing and securing electronic documents, images, and other files
- Collaboration tools - remove intra- and interdepartmental communication barriers through discussion forums, dynamic workspaces, and message boards

The present invention focusses on the "Process Engine" scope and relevant components of the "Business Analytics", together referred to as "BPM system" in the following.

The Business Process Model and Notation (BPMN, http://www.omg.org/spec/BPMN/2.0/) or Business Process Execution Language (BPEL, http://docs.oasis-open.org/wsbpel/2.0/OS/wsbpel-v2.0-OS.html) relate to graphical representations for specifying business processes in a business process model.
Such modelling languages define a set of base elements. For a list you may, for instance, refer to chapter 7 of the BPMN 2.0 specification (http://www.omg.org/spec/BPMN/2.0/PDF/).

In the scope of this disclosure, in order to keep the presentation of the inventive concept simple, the discussion is limited to the following five flow elements of a BMP workflow:
- Start and End - defines the start- and end-point of a process flow
- Task or Activity - an executable element. This could be an executable script (written in Javascript, Freemarker, Python, etc.), a connector call to a remote API, notifications (e.g. email, mobile push) or some other feature that is supported by the process engine.
- Decision - a routing element in the flow which determines the next process step based on a certain condition.
- Lane (sometimes referred to as swim lane) - a lane can host one or more of the mentioned base elements. A lane is typically associate with a certain role. Example: in a human workflow, only a financial officer may have the right to execute the elements in a certain lane. There has to be at least one lane in a workflow.
- Pool - a pool can host multiple lanes. Typically it used to express a more abstract organization unit (e.g. a company).

The stateful data is stored in a workflow session so subsequent workflow elements can pick up and manipulate the data for further processing.

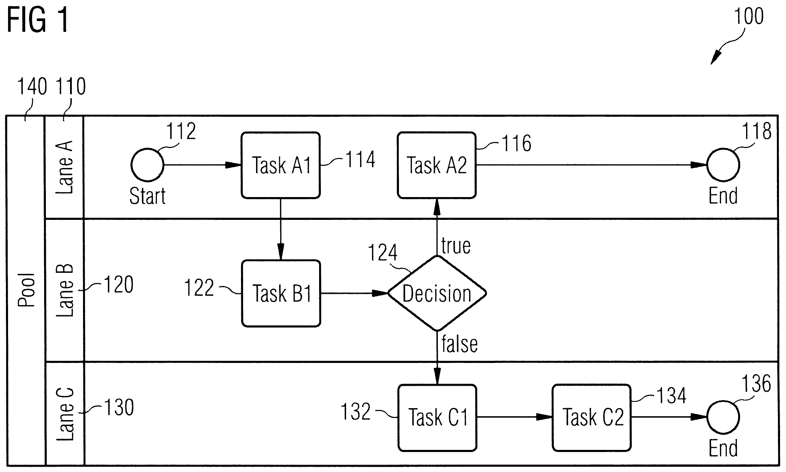

An example for a workflow 100 is shown in Figure 1. The workflow 100 spans across three lanes 110, 120 and 130, together forming a pool 140, in which the workflow 100 takes place. The first lane 110 comprises the start-point 112, two tasks 114 and 116 and a first end-point 118. The second lane 120 comprises a tasks 122 and a decision 124. The third lane 130 comprises two tasks 132 and 134 and a second end-point 136. On execution, the workflow 100 uses local calls native to the BPM system to start a subsequent task after a previous task or decision has been completed.

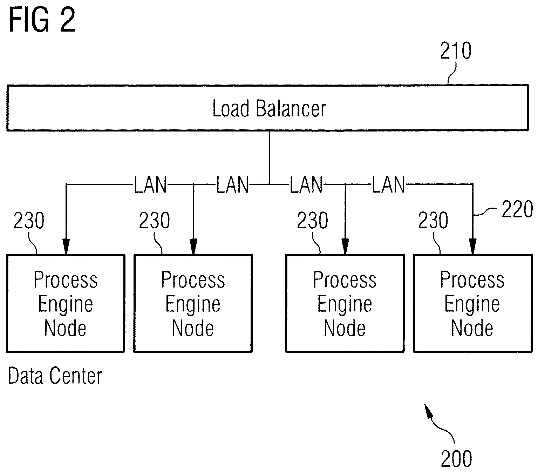

A process engine can execute such workflows 100. Traditional process engines are centralized systems deployed either in the cloud or on-premise. Figure 2 shows a logical view of a data center 200 providing a centralized process engine cluster or service. As shown therein, multiple identical instances of process engine nodes 230 are connected via a local area network (LAN) 220 and are organized in a cluster or farm of process engine nodes 230 managed by a load balancer 210 in order to increase the capacity of a conventional BPM system. An instance of a process engine node 230 may be responsible for executing the whole flow 100 or just a portion of it depending on whether the flow 100 has to be executed synchronously or asynchronously. None of the instances of process engine nodes 230 has a master role. If one node 230 fails, another process engine node 230 can take over.

### Problems or Inefficiencies

As described above, traditional BPMS systems or services are homogeneous as far as instance types are concerned as well as server-oriented and centralized. This has advantages in terms of system management, data locality and ease-of-use. Especially in case of manging workflows centred on human activities, with relative large amount of data and slow response times, this approach achieves useful results. However, it ignores certain characteristics specifically regarding mobile device and the Internet of Things (IoT) in general.

Traditional process engines merely integrate devices into a BPM workflow by either calling their APIs or they are by being triggered from these devices using an API provided by the process engine. If multiple device features have to be called to fulfil a task, it either requires multiple network calls - consuming time, energy and bandwidth - or customized logic on the device.

While process engines can scale out within individual, centrally managed clusters, the impact from the Internet of Things will be enormous. It is estimated that the number of connected devices will increase from almost 4 billion in 2014 to more than 20 billion in 2020. While cloud computing can supply a sufficient amount of compute power for data processing, the required network infrastructure may be a limiting factor both in terms of capacity and potentially reliability. This is particularly true as IoT devices may not rely on permanent Internet access. Existing process engines are not aligned to these concepts.

Accordingly, it is an object of the present invention to describe improved systems and methods that address the various shortcomings of conventional BPM systems. In particular, it is an object of the present invention to describe BPM systems and operation methods that are capable of handling machine-to-machine (M2M) type workflows in a manner that reduces the processing or storage load of individual processing devices and/or reduces the amount of network traffic involved in processing M2M workflows.

### Summary of the invention

According to a first aspect of the present invention, a heterogeneous BPM system for a distributed execution of BPM workflows is disclosed. The system comprises a master process engine configured to operate in a first operating environment, and at least one slave process engine, configured to operate in a second operating environment different from the first operating environment, wherein each slave process engine is associated with a corresponding profile comprising at least one restriction associated with the slave process engine. The master process engine is configured to manage a processing environment for a plurality of BPM workflows, to retrieve the profile associated with the at least one slave process engine and, on execution of a first BPM workflow, to send at least one processing request to the at least one slave process engine in accordance with the at least one restriction comprised in the retrieved profile. The at least one slave process engine is configured, in response to the at least one processing request, to execute at least a part of the first BPM workflow in the second operating environment.

According to one embodiment of the first aspect, the at least one processing request comprises at least one remote method call from the master process engine to the at least one slave process engine.

According to another embodiment of the first aspect, the at least one slave process engine of the system is specifically configured to execute at least one type of flow elements of the first BPM workflow, such as human workflows, system workflows, or both.

The inventors have recognized that resources provided by distributed devices, in particular mobile devices, IoT devices or other smart devices, can be used for processing BPM workflows more efficiently in a distributed manner by using one or more slave processing engines hosted in a different operating environment, e.g. on a different device. Moreover, the inventors have recognized that the various limitation posed by the distributed devices prevent the execution of conventional BPM workflow systems in such an environment. In order to overcome these problems and limitations, the constraints of the distributed devices are captured using profiles and considered by a master process engine.

Rather than using a uniform set of centralized BPM process engines, the idea is to have a geo-distributed set of heterogeneous BPM process engines. Such an approach is particularly useful in the context of the Internet or Web of Everything (IoE/WoE), comprising all devices and systems connected to the Internet.

There are two main types of process engines in the system: master process engines and slave process engines.

A BPM master process engine node or service resembles a conventional BPMS. It is responsible for the management of the execution environment as well as for analytics. Typically, this service is also responsible for collecting metadata of all devices of the distributed system, in particular profile data of distributed devices. It can also take part in the process execution. Contrary to conventional BPMS nodes, it has a master role and can therefore manage and control other process nodes and delegate parts of a BPM workflow to other process engines.

A variety of heterogeneous slave process engine nodes may reside on mobile devices, smart IoT devices as well as on conventional on-premise systems behind corporate firewalls. Such a slave is typically connected to the Internet and hosts a so called "BPM micro-core" which is aligned to the capabilities of the device or system. For example, this micro-core may be limited to system-level flows or support a specific scripting language that is native to the device. A micro-core may be able to handle multiple lanes or just one. The provision of micro-cores allows a clear definition and implementation of sub-sets of a BPM modelling language as a common standard.

The distribution of the BPM workflow also allows to bring the processing of individual workflow elements closer to the data needed for such processing. For example, when making a decision based on a large amount of data of a database, it may be more efficient to ask a device hosting the database to make the decision locally and only return the results of the decision, rather than querying and transferring a large amount of data and making the decision in a centrally located, conventional BPMS. Even in cases where only small datasets need to be queried, it may still be more efficient to push the processing towards the edge of a distributed system in case the data is distributed over a large number of individual devices of a remote system.

According to a second aspect of the present invention, a method for operating a heterogeneous BPM system, comprising a master process engine and at least one slave process engine, in particular a system in accordance with the first aspect, is disclosed. The method comprises the following steps:
- retrieving, by the master process engine, a profile for the at least one slave process engine, the profile comprising at least one restriction associated with the at least one respective slave process engine; and
- controlling, by the master process engine, for at least one flow element of a BPM workflow, whether the flow element is compatible with the at least one slave processing device, if the at least one flow element is compatible with the at least one slave processing device, allowing execution of the at least one flow element by the at least one slave processing device, and, otherwise, preventing execution of the at least one flow element device by the at least one slave processing device.

Such a method allows a reflection of profile-driven flow constraints in a process design, a deployment of a process flow in a distributed environment or the checking of profile-driven flow constraints during run-time. In this way, constraints specific to individual slave processing devices can be enforced at each stage of processing a BPM workflow.

For example, such a method allows a developer to recognize relevant constraints already at the design phase and thus to generate BPM workflows that are compatible with the constraints of distributed devices of a heterogeneous BPM system.

Alternatively or in addition, such a method may be used to make an automatic execution environment, e.g. for executing scripts or other executable program code on distributed devices, aware of the constraints of the individual devices. Thus, incompatible constraints may be detected at a time of deployment or run-time, preventing system errors or data losses.

According to a third aspect of the present invention, a method for reporting status data of a heterogeneous BPM system, comprising at least two process engines, in particular a system comprising a master process engine and at least one slave process engine in accordance with the first aspect, is disclosed. The method comprises the steps:
- performing, by a first process engine, a first part of a BPM workflow comprising at least one flow element;
- buffering, by the first process engine, status data for all flow elements of the first part of the BPM workflow performed by the first process engine;
- sending, by the first process engine, at least one processing request to a second process engine, requesting execution of a second part of the BPM workflow;
- forwarding, by the first process engine, the buffered status data corresponding to the first part of the BPM workflow upon completion of the first part of the BPM workflow or on occurrence of an exception;
- performing, by the second process engine, the second part of a BPM workflow comprising at least one flow element;
- buffering, by the second process engine, status data for all flow elements of the second part of the BPM workflow performed by the second process engine; and
- forwarding, by the second process engine, the buffered status data corresponding to the second part of the BPM workflow upon completion of the second part of the BPM workflow or on occurrence of an exception.

In a conventional process engine status data is usually forwarded to the reporting engine after each (synchronous or asynchronous) process step. In a distributed environment, the amount of reporting communication can be limited by buffering status data for all flow elements of a part of the BPM workflow performed by the given process engine.

In essence the invention takes into account that workflow-connected systems have sufficient processing power as well as certain specializations that can contribute to the value of a service. Additionally the disclosed system and methods allow to execute the process logic closer to the data source. In constrained environments, a semi-autonomous process execution can have advantages in certain scenarios (unreliable networks, small bandwidth) compared to centralized workflows which rely on simple data integration methods.

### Brief description of the drawings

Various embodiments of the inventions will be described hereafter with reference to the attached drawings.
Figure 1 shows a sample BPM Flow.
Figure 2 shows a logical view of a centralized process engine cluster or service.
Figure 3 shows a physical view of a BPM Engine Ecosystem Topology.
Figure 4 shows a logical view of a BPM Engine Ecosystem Topology.
Figure 5 shows an "exploded" view of a distributed master-slave process flow.
Figure 6 shows BPM design-time constraints, using a communication protocol as an example.
Figure 7 shows BPM design-time options, using a communication protocol as an example.
Figure 8 shows BPM run-time constraints, using a trust level as an example.
Figure 9 shows a method for flow provisioning.
Figure 10 shows a method for reporting upon exiting a micro-core.
Figure 11 shows a method for reporting upon an end of a process.
Figure 12 shows a method for normalizing process execution results.

### Detailed Description of Embodiments

Many of modern BPM workloads are managed and executed in the cloud today. However, some companies prefer a hybrid approach thus keeping at least certain workloads on-premise. While it is, of course, possible to use two BPM systems in parallel, it is not possible to design a single workflow that spans across multiple execution environments.

The present invention overcomes the limitation of the prior art, by proposing a distributed, heterogeneous Business Process Management process engine, suitable for the Internet of Everything. Therein, at least some pre-processing (aggregation) of BPM workflows is performed at the edge of the network in order to reduce the network load. This approach is somewhat similar to the concept of "Fog computing" (https://en.wikipedia.org/wiki/Fog_computing).

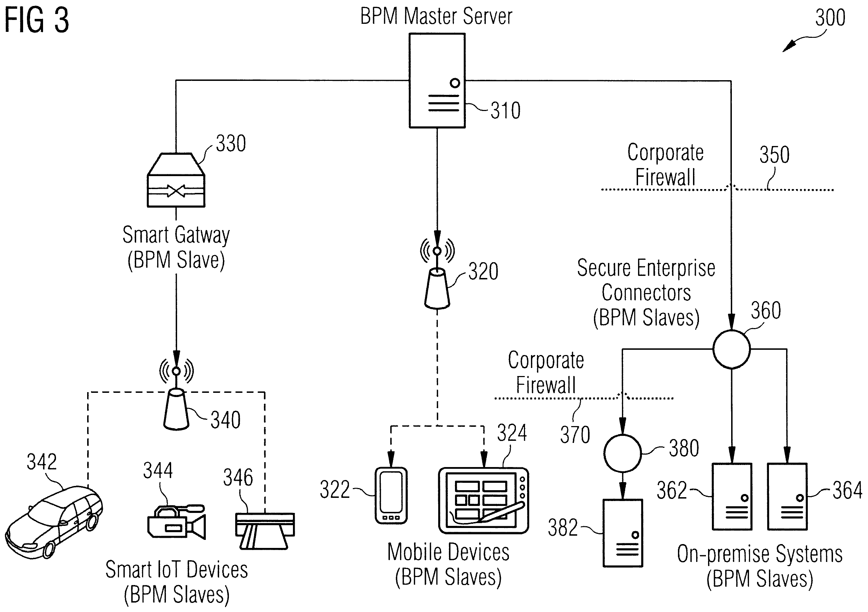

Figure 3 shows a physical view of a process engine ecosystem topology according to an embodiment of the invention. Specifically, Figure 3 discloses a distributed BPM system 300 comprising a BPM master server 310. In the example, the BPM master server 310 is connected by means of a first access point 320 to two mobile devices 322 and 324, e.g. a smartphone and a tablet computer, serving as BPM slaves. Moreover, the BPM master server 310 is connected to a Smart Gateway 330, which itself acts as a BPM slave to the BPM master server 310. The Smart Gateway 330 is connected, by means of a second access point 340, to three Smart IoT devices 342, 344 and 346, e.g. a processing device of a car control system, a web camera and a card reader. The IoT devices 342 to 346 also serve as BPM slaves. Finally, the BPM master server 310 is connected to a secure enterprise connector 360, which also acts as a BPM slave to the BPM master server 310. In the example, the secure enterprise connector 360 is arranged outside a secure, corporate network, in which the BPM master server 310 is located, and separated from it by a first corporate firewall 350. The secure enterprise connector 360 is connected, by a local network, to two on-premise systems 362 and 364, and, by a further firewall 370 and a further secure enterprise connector 380, to a third on-premise system 382 of a different local network.

Each of the devices of the distributed BPM system 300 may have a set of particular constraints as defined later on. Preferably, these constraints are defined and centrally registered whenever one device is added to the system 300. For example, such constraints may be manually entered by a system administrator or discovered automatically by an automatic configuration mechanism. However, it is also possible to discover such constraints on demand, e.g. at design- or run-time, using generally known discovery methods.

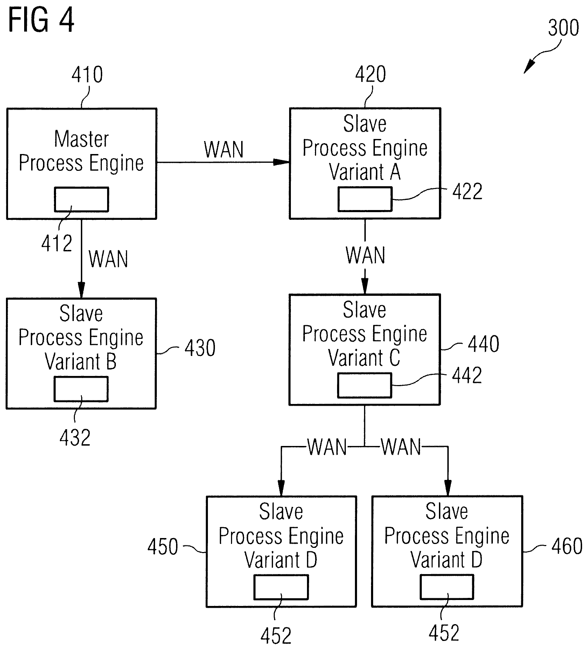

Logically, a distributed BPM system 300 consists of a set of different process engines that communicate via one or more data networks, in particular a Wide Area Network (WAN). Rather than executed as an array, these engines can have a tree-like communication structure, as shown in the logical view of the process engine Ecosystem Topology of Figure 4. Each process engine hosts at least one processing core for performing at least some flow processing elements. It should be noted, that in general, each engine could call each other engine in order to complete a given task. Thus, in the most generic form, the process engines can form a generic graph rather than a tree.

In the example of Figure 4, a master process engine 410 can distribute a workflow 100 by delegating individual parts of it, such as individual tasks, to slave process engines, in particular slave process engine 420 of variant A and slave process engine 430 of variant B. This delegation can be repeated hierarchically. For example, slave process engine 420 can delegate a sub-part of its part of the workflow to a slave process engine 440 of variant C, which in turn can further delegate individual tasks of it to two slave process engines 450 and 460, both of variant D. The various variants here may refer to different networking or processing environments, device types or available data sources, for example.

In the example, the master process engine 410 comprises a native processing core 412 capable of performing essentially all workflow elements as defined in a given BPM language or standard, such as BPMN or BPEL. In contrast, the typically restricted slave process engines 420 to 460 each host a device specific micro-core 422 to 452, which is developed for and adapted to the specific capabilities of the respective devices. Consequently, each micro-core 422 to 452 may only support a subset of available workflow elements. Different slave process engines may run instances of the same or different micro-cores. In the example, since the slave process engines 450 and 460 are of the same variant, e.g. different sensors of the same type, they each host an instance of the same micro-core 452, e.g. a micro-core suitable for execution on one of the IoT devices 342, 344 or 346. Depending on the implementation and the architecture of the respective device, the slave process engines 420 to 460 and corresponding micro-cores 422 to 452 can be implemented as a single, monolithic software component, or as multiple components, i.e. an access component and a BPM core component.

In addition to the supported set or subset of available workflow elements, each slave process engines 420 to 460 or their micro-cores 422 to 452 also provides functionality for providing profile data by a suitable interface. For example, such functions can be made available by an API or a web-service interface of the slave process engines 420 to 460, either to a calling process engine, such as the master process engine 410, or a higher-level management component of the distributed BPM system 300, such as the BPM master server 310 or a secure enterprise connector 360 or 370. Moreover, the micro-core 422 to 452 also provide an interface for receiving parts of a workflow to be executed, e.g. a web-service interface than can be called by another process engine 410 to 460. This interface can be used just to trigger the execution of a pre-stored part of a workflow or to receive the definition of the workflow itself, e.g. a script to be executed by the respective micro-cores 422 to 452.

In order to be able to execute a distributed BPM process flow, the overall system 300 should be context-aware. As mentioned above, BPM workflow processes are usually designed based on lanes 110, 120 and 130. In human workflows, this role could be accounting, line manager, etc. However, in a distributed BPM system 300, such a role can be associated with a device. The device may either represent itself (e.g. a smart IoT device 342, 344 or 346 such as a smart sensor) or a user (e.g. a mobile device 322 or 324 has a relationship with one user). The constraints imposed by the device have to be used to limit the amount of activities that one can perform in this lane, e.g. an IoT sensor will usually not be able to send out emails or store large amounts of data locally. In a sense, the lanes 110, 120 and 130 are equivalent to a logical execution role.

A workflow designer defines a process flow either on or guided by a design tool of the BPM master server 310. Thus specific constraints of micro-cores 422 to 452 of slave process engines 420 to 460 should be centrally configured or at least fetched from the distributed micro-cores 422 to 452 of the slave process engines 420 to 460.

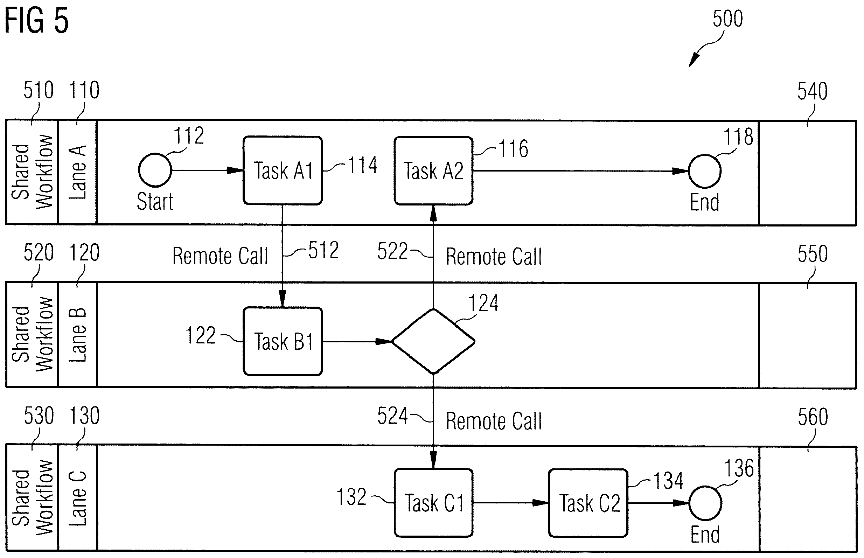

The illustration of Figure 5 shows an "exploded" view of an example of a distributed workflow 500 which is in part executed on the native processing core 412 of the BPM master server 310 as well as on two geo-distributed micro-cores 422 and 432 of BPM slave process engines 420 and 430. The workflow 500 could be defined in a XML document stored on the BPM master server 310 in a suitable modelling language, such as BPMN or BPEL and contain references to URL or URIs of computing resources provided by the BPM master process engine 410 and/or the BPM slave process engines 420 or 430.

The distributed workflow 500 spans three lanes 110, 120 and 130 with flow elements 112 to 136 as detailed above with regard to Figure 1. However, unlike in the centralized scenario, each lane 110, 120 and 130 is associated with a corresponding device and/or processing core 412, 422 and 432 and executes its own shared workflow part 510, 520 and 530 respectively. Since the shared workflow parts 510, 520 and 530 are performed on different devices and/or in different processing environments, whenever the workflow 500 requires access to another lane 110, 120 or 130, a remote method call 512, 522 or 524 is employed. Protocols for defining and processing systems for performing such remote method calls 512, 522 or 524 in a distributed system are known from the prior art and are therefore not explained in detail here.

While conventional BPM workflow systems centred on human roles of an organization often require manual user input, the distributed system 300 is particularly useful in a M2M context, where the individual tasks and decisions can be performed autonomously or semi-autonomously by the distributed devices involved. An example of such a workflow is the integration of various automatic IT subsystems to build a bigger IT system with little or no human interaction.

The operation of a distributed BPM system 300 according to an embodiment of the present invention will next be outlined using a bottom-up approach.

### Micro Core Profiles

A lane 110, 120, 130 hosts BPM flow object 112 to 136 such as activities 114, 116, 122, 132 and 134 or decisions 124 etc. Users or systems can be associated with such a role. In the disclosed embodiment, an execution profile 540, 550 and 560 is associated with each micro-core. In the example, each lane 110, 120 and 130 is processed by a different micro-core and therefore has a different execution profile 540, 550 and 560 attached as shown in Figure 5. Each execution profile 540, 550 or 560 defines the specific characteristic of the corresponding environment and/or device, in which the micro-cores are hosted. A profile 540, 550 or 560 can define, but is not limited to the following properties:
- Endpoint type
   ∘ Native (execution on the BPM master server 310)
   ∘ IPv4/IPv6 address
- supported inbound/outbound communication flow protocols
   ∘ Native - execution on the BPM master server 310
   ∘ HTTP(s) - (secure) hypertext transfer protocol
   ∘ SMTP - Simple Mail Transport Protocol
   ∘ MQTT - MQ Telemetry Transport - a messaging protocol used by IoT devices
   ∘ CoAP - Constrained Application Protocol - a communication protocol used by IoT devices
   ∘ etc.
- supported execution mode
   ∘ synchronous
   ∘ asynchronous
   ∘ both
- supported workflow types
   ∘ Human workflows
   ∘ System workflows
   ∘ both
- supported Scripting Language
   ∘ None
   ∘ Javascript
   ∘ Python
   ∘ etc.
- Constraints
   ∘ Bandwidth
   ∘ CPU
   ∘ Memory
   ∘ Storage
   ∘ Unidirectional/bidirectional communication
- Trust Level - Low to High
- Multi-Lane capability - true or false
- Reporting
   ∘ instantly - per process step
   ∘ delayed till process handover to different process engine
   ∘ delayed till process reaches end state or exception

The capabilities as defined in the micro-core profiles 540, 550 and 560 provide the possible boundaries to be recognized during the process design phase as well as process execution.

### Design-time Constraints

Based on the profile data, a BPM design tool, e.g. a software component executed by the BPM master server 310, has to control which flow element can be used on the specific device and how the different cores 412, 422 and 432 can communicate. During design time, the user can define the device that he or she would like to include in the BPM workflow. By doing so, in the described embodiment, the profiles are fetched and, subsequently, taken into account by the design tool. The design tool is then responsible for enforcing the constraints by limiting the design options. As an example, it does not make sense to deploy Javascript code on a micro-core 422 that can only execute Python code.

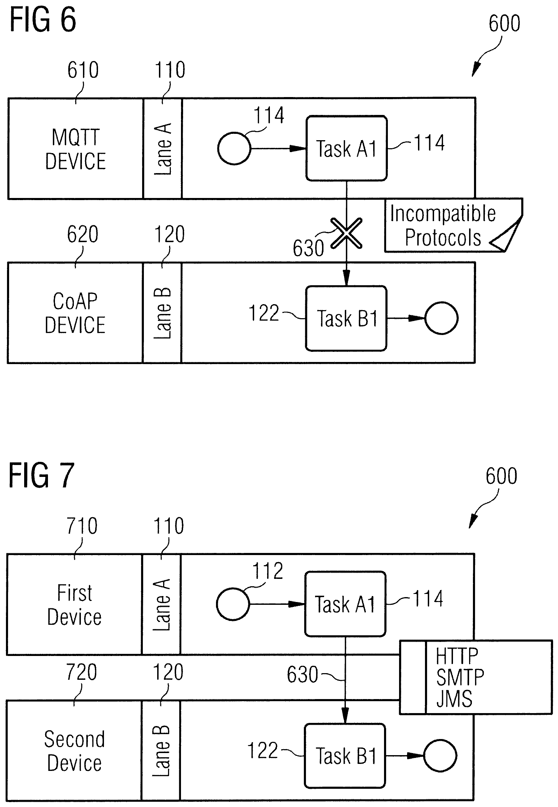

Figure 6 shows, as an example for BPM design-time constraints, the handling of a communication protocol between a BPM process spanning two lanes 110 and 120 by a design tool 600. One lane 110 shall be executed on an MTTQ device 610, the other lane 120 on a CoAP device 620. MQTT and CoAP are the respective communication protocols of these devices 610 and 620 - thus the protocols are not compatible. A process editor of the design tool 600 prohibits a direct connecting 630 between Task A1 and Task B1. In this case, it may not be possible to delegate task B1 from MTTQ device 610 to another device. Therefore, if possible, the task B1 may be performed either by the MQTT device 610 itself or by or through mediation of another device, such as the master process device 410, which is preferable compatible with all relevant protocols used in the distributed BPM system 300.

Conversely if two devices 710 and 720 support multiple compatible communication protocols, the design tool 600 allows a process designer to choose between a connections 630 of different types - here between HTTP(s), JMS, SMTP. This situation is depicted in Figure 7, showing BPM design-time options using the communication protocol as example.

### Run-time Constraints

A further consequence of the inventive approach are constraints during run-time. If such constraints cannot be enforced at the design stage, they should preferably be monitored and enforced at runtime by the distributed BPM system 300.

According to the described embodiment, a trust level is provided in the definition of the profiles 540 to 560. A task in the process may flag that the data in the workflow session has to comply with a given trust level X, e.g. high. The different device profiles 540 to 560 are part of the workflow definition, so that the native processing core 412 or a local micro-core 422 or 432 can verify whether a trust level tagged data document is allowed to be communicated across certain lane boundaries.

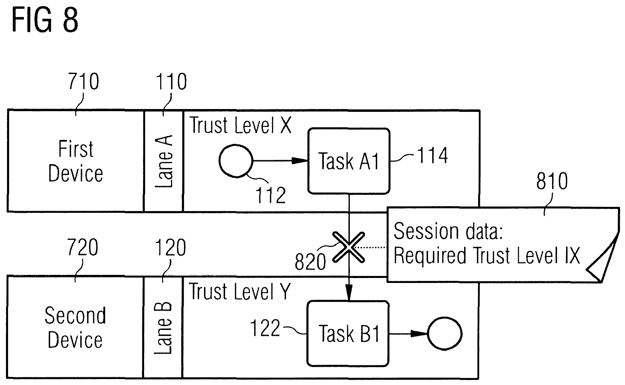

A relevant example is an Internet-of-Things scenario. Devices located in public spaces can easily be stolen, so they should have a low trust level rating. Figure 8 shows an exemplary BPM process using a trust level as an example of a run-time constraint. In the example, the session data 810 of a task A1 being executed on lane 110 hosted on a first device 710 indicates that its data requires a trust level of X during run-time. At run-time, a task B1 executed in another lane 120 by a micro-core of a second device 720 is associated with trust level Y, e.g. low, for example because the second device 720 is currently connected to an open, unsecured network such as the Internet. In the example, trust level Y is below the required trust level X. Thus, a remote call 820 from the first device 710 to the second device 720 is prevented at run-time. In another context, the second device 720 may be connected to closed, secured network such as a corporate LAN, associated with trust level X. In this situation, the remote method call 820 is permissible.

In the context of this example, it should be noted that the Trust-Level may also be implemented as a design-time constraint. The (viable) example was mentioned to illustrate the concept of run-time constraints here. Other run-time constraints may exist with regard to an availability of storage, network and processing resources provided by a distributed device.

Moreover, if a device is corrupted during runtime due to some reason, there are several possible scenarios. A first, relatively simple scenario is that a second device or process engine, e.g. slave process engine 440, does not respond upon calling by a first device or process engine, e.g. slave process engine 420. In this case, the calling entity, e.g. the first slave process engine 420 has to report the error to the BPM master server 310 or master process engine 410. Alternatively, the error handling can be modelled in the BPM workflow at design time.

A second, more complex scenario occurs, if the second device or process engine 440 is called successfully (with no error report from the second device). In this case, if the second device or process engine 440 is corrupted, it may not be able to call the master process engine 410 or a process step on a subsequent micro-core 452 of a third device or process engine 450. This subsequent process engine 450 could be notified by the previous process engine 420 that it has to expect a message from the second device or process engine 440 by a given time. If the given time has passed - because the micro-core 442 of the second device is corrupted - the third device or process engine 450 should report a timeout failure back to the master process engine 410.

### Flow Provisioning

As detailed above, the design of a workflow is typically a centralized aspect on the BPM master server 310. Moreover, the deployment of a distributed workflow 500 requires more intelligence than on a conventional system. A conventional BPM system has access to the whole workflow 100, because all centralized process engine nodes 230 are capable of executing the workflow 100.

In a heterogeneous environment, such as the distributed BPM system 300, the individual micro-cores 422, 432, 442 and 452 should follow the "need-to-know" paradigm - thus they should only be aware of process portion or shared workflow 510, 520 or 530 that they are responsible for. Similarly, if a calling process engine 410 comprises a large amount of attributes as session data and calls upon another process engine 420 for performing a workflow element, only those attributes relevant for the execution of said part of the workflow should be encapsulated in a data document transferred to the other process engine 420.

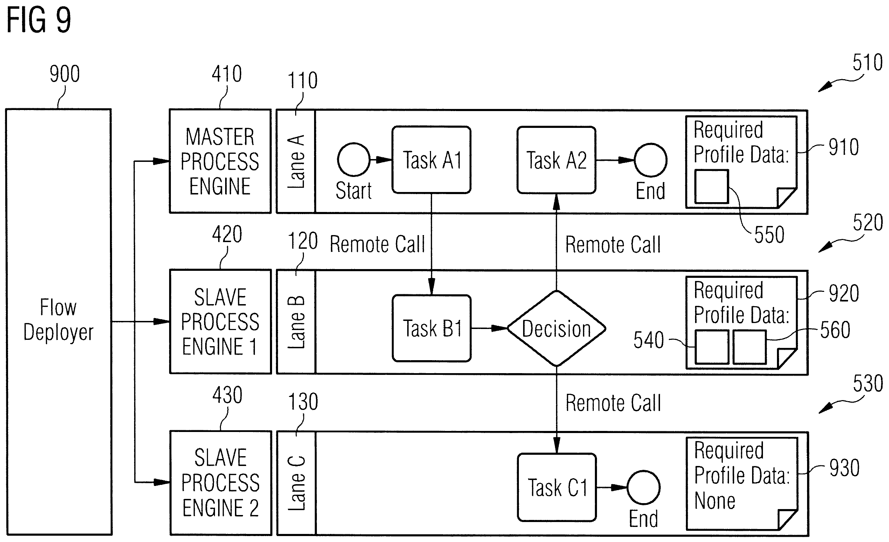

Coming back to the example workflow 500 of Figure 5, the different deployment units including the required execution profile 540, 550 and 560 for the three different process engines 410, 420 and 430 are indicated in Figure 9 showing the flow provisioning.

In the example, a central workflow deployer 900, which may be executed on the PBM master server 310 or another device arranged in a protected environment, deploys the individual parts of the overall workflow 500 as shared workflows 510, 520 and 530 to three process engines 410, 420 and 430. In this process, the workflow deployer 900 makes sure that shared workflows 510, 520 and 530 are only deployed to compatible micro-cores. Moreover, in the described embodiment, the workflow deployer 900 is also aware of all device specific constraint profiles. However, following the "need-to-know" paradigm, based on an analysis of the intra-workflow dependencies, the workflow deployer 900 provides only the profile 550 of lane 120 to a local context 910 the master process engine 410 hosting lane 110, and the profiles 540 of lane 110 and 560 of lane 130 to a local context 920 the slave process engine 420 hosting lane 120. Since slave process engine 430 is not dependent on any other process engines for performing its own lane 130, no profiles are communicated to a local context 930 of the slave process engine 430.

### Reporting

One of the primary characteristics of a BPM system is process analytics or reporting. While a distributed reporting engine is technical feasible, at least in some contexts, it makes sense to process status data centrally because of network, computing and storage constraints in the distributed slave processing engines or their respective micro-cores. Accordingly, different methods of reporting data in a distributed BPM system are described next. It should be understood, that these methods are not an essential part of the distributed BPM system 300 described above, but may be combined with it to further improve its usefulness.

In BPM, two process elements communicate data via a data document. Such a data document contains three types of information: the process payload (run-time data) that can be read and/or manipulated by a process task, the process state, and execution exceptions and/or error data. A reporting engine is usually not used to analyse payload data. Instead, it takes advantage of the process state, e.g. how long it took to execute a task, who is responsible/accountable, etc., and error information.

In a conventional process engine this data is usually forwarded to the reporting engine after each (synchronous or asynchronous) process step such as individual flow elements, because processing power and network capacity are usually not constraint within a closed, centralized system.

In a distributed setup, such as the system 300, - especially with constrained slave process engines 420 to 420 - this may not be desirable, albeit still possible. In an embodiment of the invention, the amount of reporting communication is limited in a distributed environment by buffering and forwarding the reporting data to the reporting engine as soon as the process payload leaves a micro-core or an error or end state is reached.

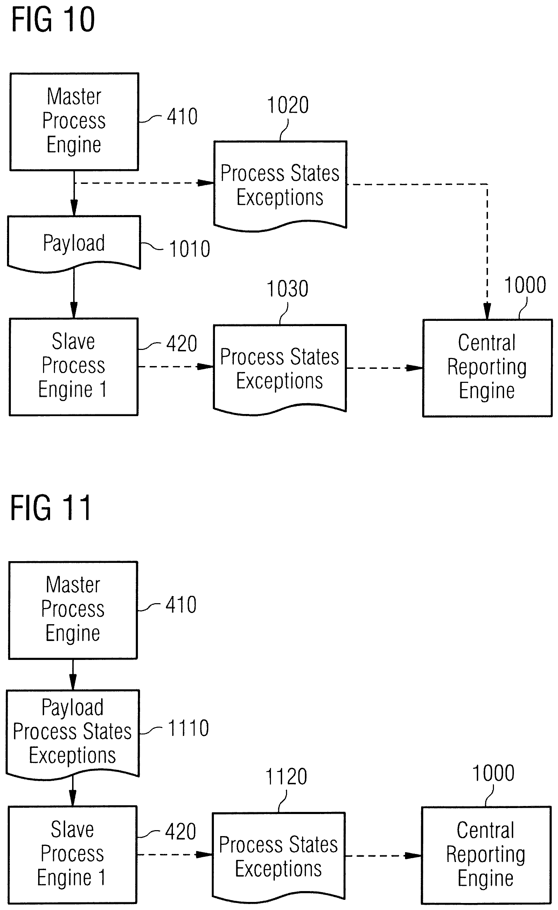

Figure 10 shows a dataflow according to a first alternative, wherein status data is reported upon exiting a micro-core directly to a central reporting engine 1000. In the example, once payload data 1010 is forwarded from a master process engine 410 to a slave process engine 420 for further processing, process state and exception data 1020 collected by the master process engine 410 is forwarded independently from the payload data 1010 to the central reporting engine 1000. Once the slave process engine 420 has completed its part of the distributed workflow 500 or an exception occurs, the slave process engine 420 forwards its process state and exception data 1030 also to the central reporting engine 1000, which may then combine, correlate or otherwise process the process state and exception data 1020 and 1030.

Figure 11 shows a dataflow according to a second alternative, wherein the reporting data remains attached to the payload data in one data document 1110. Once the master process engine 410 completes processing and invokes the slave process engine 420, all payload, process state and exception data is forwarded to the slave process engine 420. The slave process engine 420 will only forward the received process state and exception data once it has completed its part of the distributed workflow 500 or an exception occurs. In either case, combined processing state and exception data 1120 is then forwarded together to the central reporting engine 1000, which may then process the combined process state and exception data 1120.

A hybrid reporting model, i.e. a combination of the two alternatives, is also possible. For example, storage restricted IoT devices 342, 344 and 346 may forward their process state and exception data 1030 directly to a central reporting engine 1000 hosted by the BPM master server 310, whereas on-premise systems 362 and 364 may forward their process state and exception data together with payload data 1110 to the secure enterprise connector 360 for further processing, before the secure enterprise connector 360 transfers aggregated state and exception data 1120 to the central reporting engine 1000.

In addition to the standard reporting, the process execution results can optionally be normalized to allow data-mining. The main objective of this normalization is the possibilities to compare the execution of the same process or workflow element in different contexts, compare the execution of the same process or workflow element in different devices, create a set of a "normal" execution results of one process or workflow element to allow delta detection, for example for such as incident forecasting or monitoring of performance issues, or simply to offer the same kind of reports for all processes.

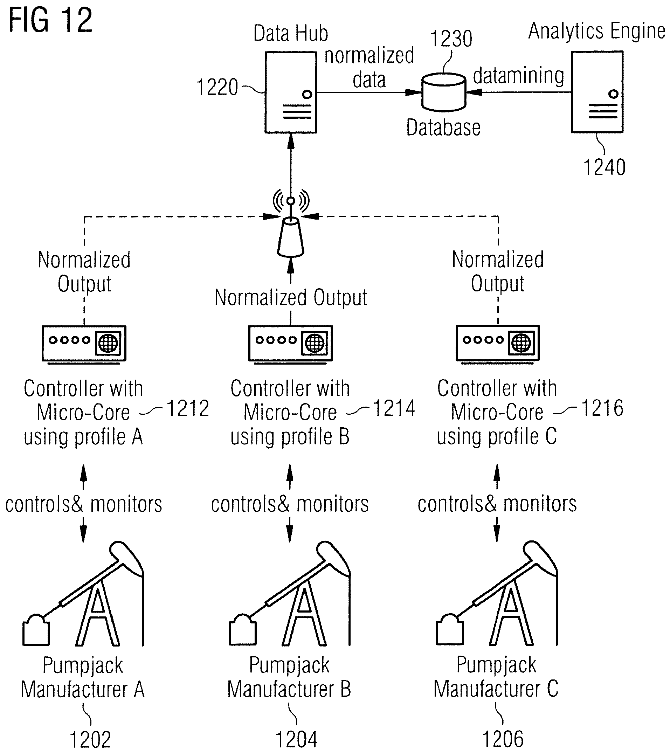

As an example for normalized data mining an oil company, which is running a variety of oil pump jacks from different manufacturers, is considered and illustrated in Figure 12. Due to different technologies the oil pump jacks 1202, 1204 and 1206 may have a different internal data representation used in their respective controllers 1212, 1214 and 1216. In order to allow data mining, the micro-core (running on the different controllers 1212, 1214 and 1216) normalizes the data using data mapping information defined in the different micro-core profiles. In this case, the profile defines a mapping from the device specific format to a generic format. The normalized data can then be forwarded to a data hub 1220 and stored in a database 1230. From here on an analytics engine 1240 can perform datamining on the normalized data.

Normalization of process execution results can be achieved using different algorithms or processing means, as far as an interface is provided to compare, measure or query the execution output.

In the above description, various parts and aspects of a distributed BPM processing system have been described with regard to various embodiments. The individual parts and aspects may be combined in different ways to realise various functions and advantages of a distributed BPM system. The embodiments of the present invention, amongst other, offer the following benefits: load distribution using a distributed Flow execution using process engines with heterogeneous capabilities, and unifying the process design across heterogeneous execution environments.

### List of references

- 100: workflow
- 110: lane A
- 112: start-point
- 114: task A1
- 116: task A2
- 118: first end-point
- 120: lane B
- 122: task B1
- 124: Decision
- 130: lane C
- 132: task C1
- 134: task C2
- 136: second end-point
- 140: pool
- 200: data center
- 210: load balancer
- 220: local area network
- 230: process engine node

- 300: distributed BPM system
- 310: BPM master server
- 320: first access point
- 322, 324: mobile devices
- 330: Smart Gateway
- 340: second access point
- 342, 344, 346: Smart IoT device
- 350: first firewall
- 360: first secure enterprise connector
- 362, 364: on-premise system
- 370: second firewall
- 380: second secure enterprise connector
- 382: on-premise system
- 410: master process engine
- 412: native processing core
- 420, 430, 440, 450, 460: slave process engine
- 422, 432, 442, 452: micro-core

- 500: distributed workflow
- 510: shared workflow (of lane A)
- 512: remote method call (from lane A to lane B)
- 520: shared workflow (of lane B)
- 522: remote method call (from lane B to lane A)
- 524: remote method call (from lane B to lane C)
- 530: shared workflow (of lane C)
- 540: execution profile (of lane A)
- 550: execution profile (of lane B)
- 560: execution profile (of lane C)

- 600: design tool
- 610: MQTT device
- 620: CoAP device
- 630: connection
- 710: first device
- 720: second device
- 810: session data
- 820: remote call
- 900: workflow deployer
- 910, 920, 930: local context

- 1000: central reporting engine
- 1010: payload data
- 1020, 1030: process state and exception data
- 1110: data document
- 1120: combined process state and exception data

- 1202, 1204, 1206: oil pump jacks
- 1212, 1214, 1214: controller
- 1220: data hub
- 1230: database
- 1240: analytics engine

## Claims

1. A heterogeneous business process management, BPM, system (300) for a distributed execution of BPM workflows, comprising:
- a master process engine (410) configured to operate in a first operating environment; and
- at least one slave process engine (420), configured to operate in a second operating environment different from the first operating environment, wherein each slave process engine (420) is associated with a corresponding profile (550) comprising at least one restriction associated with the slave process engine (420);
- wherein the master process engine (410) is configured to manage a processing environment for a plurality of BPM workflows, to retrieve the profile (550) associated with the at least one slave process engine (420) and, on execution of a first BPM workflow (500), to send at least one processing request to the at least one slave process engine (420) in accordance with the at least one restriction comprised in the retrieved profile (550); and
- wherein the at least one slave process engine (420) is configured, in response to the at least one processing request, to execute at least a part of the first BPM workflow (500) in the second operating environment.

2. The system (300) according to claim 1, wherein the at least one slave process engine (420) is further configured to provide data from at least one predetermined data source and to execute at least a part of the first BPM workflow (500) in the second operating environment based on data provided from the at least one data source.

3. The system (300) according to one of claims 1 or 2, wherein the first operating environment comprises a secure network environment, in particular a local and/or corporate network, separated from an insecure network environment, in particular the Internet, by at least one access point (320), firewall (350) or gateway (330).

4. The system (300) according to one of claims 1 to 3, wherein the at least one slave process engine (420) comprises a BPM micro-core (422) for execution of restricted parts of the first BPM workflow (500), wherein the micro-core (422) is restricted with respect to the use on a specific device, in particular a mobile device (322, 324), with respect to a specific operating environment, in particular an Internet network environment, with respect to a particular scripting language supported for execution of the at least one processing request and/or with respect to a number of lanes (110, 120, 130) of the first BPM workflow (500) that can be processed by the micro-core (422).

5. The system (300) according to one of claims 1 to 4, wherein the at least one slave process engine (420) is configured to operate on a processing unit of at least one mobile device (322, 324) or an Internet of Things, IoT, device (342, 344, 346) arranged outside the first operating environment.

6. The system (300) according to one of claims 1 to 5, wherein the master process engine (410) comprises:
- a design module, the design module configured to restrict the designing of BPM workflows based on the restrictions comprised in the retrieved profile (550); or
- a deployment module, the deployment module configured to restrict a deployment of the at least one part of the first BPM workflow (500) to the at least one slave process engine (420) based on the restrictions comprised in the retrieved profile (550).

7. The system (300) according to one of claims 1 to 6, wherein the master process engine (410) is configured to execute a predefined set of BPM workflow instructions and the at least one slave process engine (420) is configured to execute a device-specific subset of the predefined set of BPM workflow instructions.

8. A method for operating a heterogeneous business process management, BPM, system (300), comprising a master process engine (410) and at least one slave process engine (420), in particular a system (300) in accordance with any one of the claims 1 to 10, comprising:
- retrieving, by the master process engine (410) or a BPM design tool (600), a profile (550) for the at least one slave process engine (420), the profile (550) comprising at least one restriction associated with the at least one slave process engine (420); and
- controlling, by the master process engine (410) or the BPM design tool (600), for the at least one flow element of a BPM workflow (500), whether the at least one flow element is compatible with the at least one slave processing device (420), if the at least one flow element is compatible with the at least one slave processing device (420), allowing execution of the at least one flow element by the at least one slave processing device (420), and, otherwise, preventing execution of the at least one flow element device by the at least one slave processing device (420).

9. The method in accordance with claim 8, further comprising:
- deploying, by the master process engine (410) or a workflow deployer (900), part of a BPM workflow (500) comprising a plurality of flow elements on the at least one slave processing device (420), in case execution of all flow elements of the plurality of flow processing elements of the part of the BPM workflow (500) have been allowed.

10. The method in accordance with claim 9, further comprising:
- sending, by the master process engine (410), at least one processing request to the given slave process engine (420) to request execution of the part of the BPM workflow (500), in case execution of all flow elements corresponding to the part of the BPM workflow have been allowed; and
- executing, by the given slave process engine (420), at least one flow element of the deployed part of the BPM workflow (500).

11. The method in accordance with any one of the claims 8 to 10, wherein
- the step of controlling is performed at a design stage, such that no distributed BPM workflows (500) can be designed that violate any of the restrictions of the retrieved profile (550); or
- the step of controlling is performed at a deployment stage, such that no flow element of a BPM workflow (500) is deployed to the at least one slave process engine (420), in case does not comply with the restrictions of the retrieved profile (550); or
- the step of controlling is performed at a run-time stage, such that no processing request requesting execution of a part of the BPM workflow (500) is send to the at least one slave process engine (420), in case it does not comply with the restrictions of the retrieved profile (550).

12. A method for reporting status data of a heterogeneous business process management, BPM, system (300), comprising at least two process engines (410, 420), in particular a system (300) comprising a master process engine (410) and at least one slave process engine (420) in accordance with any one of the claims 1 to 10, the method comprising:
- performing, by a first process engine (410), a first part of a BPM workflow (500) comprising at least one flow element;
- buffering, by the first process engine (410), status data for all flow elements of the first part of the BPM workflow (500) performed by the first process engine (410) ;
- sending, by the first process engine (410), at least one processing request to a second process engine (420), requesting execution of a second part of the BPM workflow (500);
- forwarding, by the first process engine (410), the buffered status data corresponding to the first part of the BPM workflow (500) upon completion of the first part of the BPM workflow (500) or on occurrence of an exception;
- performing, by the second process engine (420), the second part of a BPM workflow (500) comprising at least one flow element;
- buffering, by the second process engine (420), status data for all flow elements of the second part of the BPM workflow performed by the second process engine (420); and
- forwarding, by the second process engine (420), the buffered status data corresponding to the second part of the BPM workflow (500) upon completion of the second part of the BPM workflow or on occurrence of an exception.

13. The method in accordance with claim 12, wherein, in the steps of forwarding, the first and second process engines (410, 420) respectively forward the buffered status data directly to a reporting engine (1000).

14. The method in accordance with claim 12, wherein, in the step of forwarding, by the first process engine (410), the buffered status data of the BPM workflow (500), the first process engine (410) forwards the buffered status data corresponding to the first part of the BPM workflow (500) to the second process engine (420), and, in the step of forwarding, by the second process engine (420), the buffered status data of the BPM workflow (500), the second process engine (420) forwards the buffered status data corresponding to the first and second part of the BPM workflow (500) to a reporting engine (1000).

15. The method in accordance with any one of the claims 12 to 14, further comprising:
- comparing first status data for at least one flow element of a BPM workflow (500) performed by the first process engine (419) with second status data for the at least one flow element of the BPM workflow (500) performed by the second process engine (420);
- determining normalized status data contained in both the first status data and the second status data; and/or
- determining differential status data contained in the first status data and not contained in the second status data.
